Europäisches Patentamt

European Patent Office

Office européen des brevets

(19)

(11) Veröffentlichungsnummer: **0 282 442 B1**

# EUROPÄISCHE PATENTSCHRIFT

(12)

(45) Veröffentlichungstag der Patentschrift :
09.10.91 Patentblatt 91/41

(51) Int. Cl.⁵ : **B62D 13/02**, B60G 17/04,
B62D 61/12, B62D 53/06,
B60G 17/04

(21) Anmeldenummer : 88730059.8

(22) Anmeldetag : 10.03.88

(54) Fahrgestell für Transportfahrzeuge.

(30) Priorität : 10.03.87 DE 3707975
13.05.87 DE 3716347
29.05.87 DE 3718532

(43) Veröffentlichungstag der Anmeldung :
14.09.88 Patentblatt 88/37

(45) Bekanntmachung des Hinweises auf die
Patenterteilung :
09.10.91 Patentblatt 91/41

(84) Benannte Vertragsstaaten :
AT BE DE FR GB IT NL SE

(56) Entgegenhaltungen :
DE-A- 1 961 678
DE-A- 2 049 748
DE-A- 3 523 745
DE-U- 6 751 093
GB-A- 2 137 940

(73) Patentinhaber : ABS-TRANSPORT GMBH
Fritz-Reuter-Strasse 4
W-1000 Berlin 62 (DE)

(72) Erfinder : Kasischke, Michael
Schlettstadter Strasse 12
W-1000 Berlin 37 (DE)
Erfinder : Delke, Ingo
Wilseder Strasse 8
W-1000 Berlin 41 (DE)

(74) Vertreter : Maikowski, Michael, Dipl.-Ing. Dr.
Patentanwälte Maikowski & Ninnemann
Xantener Strasse 10
W-1000 Berlin 15 (DE)

## Beschreibung

Die Erfindung betrifft ein Fahrgestell nach dem Oberbegriff des Patentanspruchs 1.

Transportfahrzeuge, insbesondere Ver- und Entsorgungstransportfahrzeuge müssen sowohl auf Straßen als auch im Gelände, zum Beispiel auf unbefestigten Baustellen, voll fahr- und manövrierfähig sein. Nur so können alle Transportaufgaben, insbesondere die Zulieferung und der Abtransport, sowohl von Silos als auch von Containern, insbesondere Entsorgungscontainern sicher durchgeführt werden.

Die DE-A-3523745 beschreibt einen Sattelzug, bestehend aus einer Zugmaschine und einem über eine Sattelkupplung mit der Zugmaschine verbindbaren Sattelanhänger der wenigstens eine mittels eines Lenktriebes lenkverstellbare Längsachse und eine Steuereinrichtung für den Lenktrieb aufweist. Bei diesem Sattelzug ist für die Lenkachse eine Verriegelungsvorrichtung vorgesehen. Bei gelöster Verriegelungsvorrichtung ist eine Steuereinrichtung für den Lenktrieb durch einen im Führerhaus der Zugmaschine vorgesehenen Steuersschalter willkürlich betätigbar. Durch diese Ausbildung des Sattelzuges soll ein Wenden und Versetzen auf engem Raum sichergestellt werden.

Aus der DE-A-2049748 ist eine nachlaufgelenkte Achse für ein Fahrgestell eines Transportfahrzeuges bekannt.

Der Erfindung liegt die Aufgabe zugrunde, derartige Fahrgestelle für Transportfahrzeuge derart zu gestalten, daß mit den Fahrzeugen sowohl im Gelände als auch auf befestigten Straßen und insbesondere auf unbefestigten Baustellen eine volle Fahr- und Manövrierfähigkeit erzielt werden kann.

Erfindungsgemäß wird diese Aufgabe durch die technische Lehre des Patentanspruchs 1 gelöst.

Mit Vorteil ist wenigstens eine der Fahrzeugachsen als Liftachse ausgebildet, wodurch eine Anpassung an die Last ermöglicht wird und/oder wenigstens eine der Fahrzeugachsen mit Vorteil in Längsrichtung des Transportfahrzeuges verschiebbar ist, wodurch eine Einstellung des Achsdrucks möglich ist. Durch eine Anpassung an die Last und eine Einstellung des Achsdruckes wird sowohl im Gelände als auch auf befestigten Straßen insbesondere auf unbefestigten Baustellen eine volle Fahr- und Manövrierfähigkeit erzielt. Durch die Verschiebung einer lenkbaren Achse wird die Manövrierfähigkeit des Fahrzeuges an gegebene Bedingungen angepaßt. Insbesondere können die drehschemelgelagerten Achsen über die Drehachse des Drehschemels geschoben werden. Dadurch wird auch bei Rückwärtsfahrt eine Nachlaufsteuerung gewährleistet.

Bei den betrachteten, luftgefederten Fahrzeugen ist es für viele Einsatzfälle erforderlich, die Luftfederung derart zu gestalten, daß sowohl eine niedrige Fahrhöhe bei kleinem Achsausgleich als auch eine Geländetauglichkeit bei großem Achsausgleich erreicht werden kann. Luftgefederte Fahrzeuge weisen Luftdrucksteuerventile an der abgefederten Achse auf, deren Steuerelemente mittels einer Schwinge einstellbar sind. Diese ist über ein Einstellglied mit dem Fahrzeug verbunden. Das Einstellglied wird vom Fahrzeughersteller eingestellt und arretiert.

Mit Vorteil ist das Einstellglied ein mit einer Rückholfeder versehener, luftdruckgesteuerter Stellzylinder. Mit diesem Stellzylinder kann die Schwinge in vorbestimmte Endlagen gebracht werden, so daß vorbestimmte Steuerzustände am Luftdrucksteuerventil und damit vorbestimmte Beaufschlagungen der Luftfeder erfolgen können.

Ausführungsbeispiele der Erfindung sollen in der folgenden Beschreibung unter Bezugnahme auf die Figuren der Zeichnung erläutert werden.

Es zeigen :

Figur 1    eine schematische Darstellung einer lenkbaren Achse,
Figur 2    eine schematische Darstellung von Achsanordnungen,
Figur 3    eine Prinzipskizze einer Luftfedersteuerung.

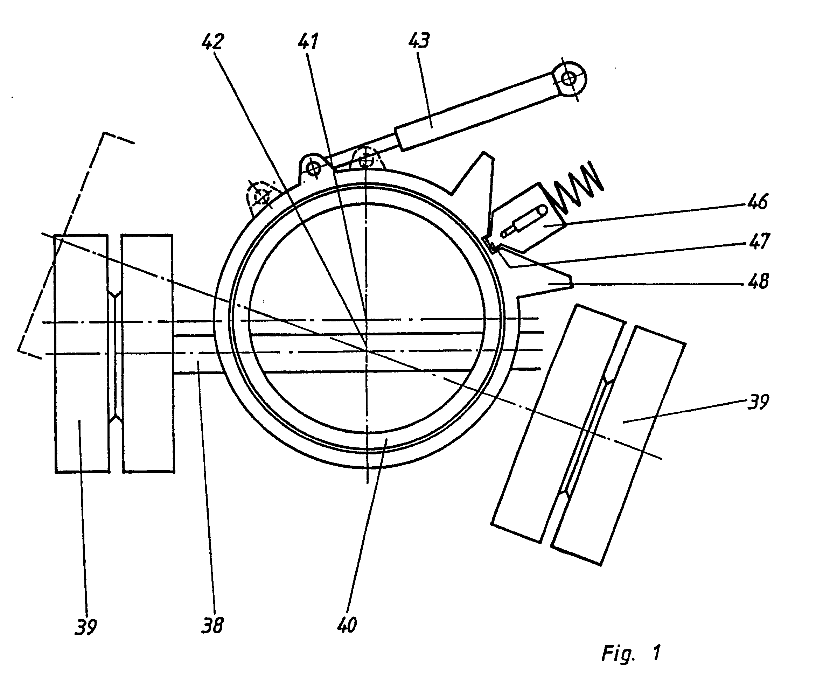

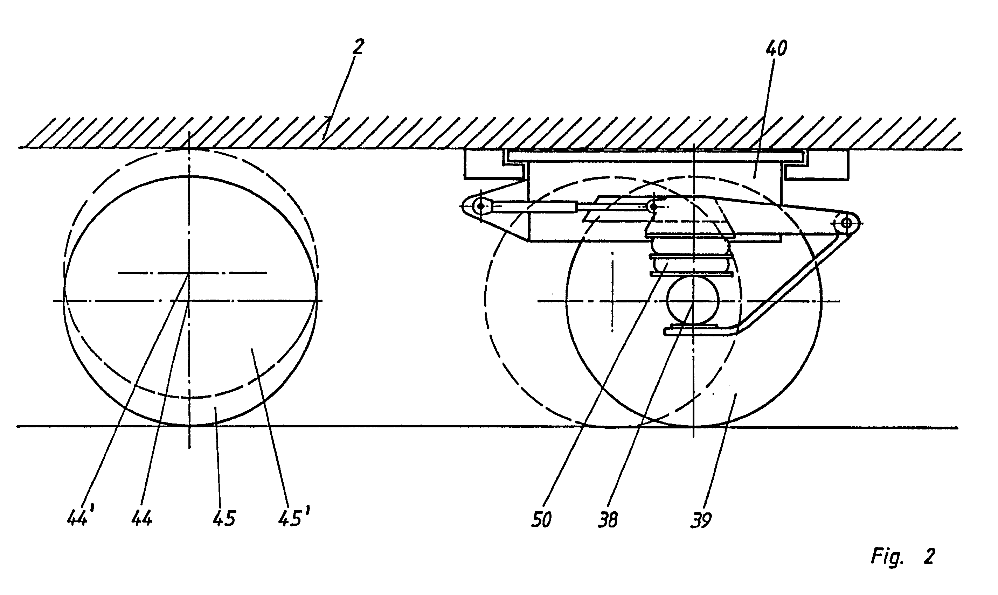

Die Figuren 1 und 2 zeigen schematisch die gesonderte freie Lenkung und das Liften von Fahrzeugachsen. Wenn in der vorliegenden Anmeldung von einer Achse die Rede ist, umfaßt dieser Begriff auch Achsaggregate. In Figur 1 ist schematisch eine Fahrzeugachse 38 mit ihren Rädern 39 dargestellt. Diese Fahrzeugachse 38 ist an einem Drehschemel 40 im Abstand 42 von dessen Drehpunkt 41 montiert. Dadurch wird die Fahrzeugachse 38 durch Straßenreibung nachlaufgelenkt. Für die Lenkung der Fahrzeugachse 38 ist schematisch ein Lenkzylinder 43 gezeigt. Bei 48 ist schematisch eine am Drehschemel 40 ausgebildete Nut dargestellt, in die eine Arretierung 46 mit einem Keil 47 eingreifen kann, um die Lenkung in der Geradeauslaufstellung zu arretieren.

Eine der Fahrzeugachsen kann mit ihren Rädern liftbar ausgebildet sein, um aus der in Figur 2 dargestellten Fahrstellung, in die bei 44' und 45' gezeigte Hublage, gebracht zu werden. Weiterhin ist in Figur 2 die Möglichkeit einer achsialen Verschiebung der Fahrzeugachse 38 in Längsrichtung des Fahrzeuges veranschaulicht.

Die Lenkachsen können liftbar sein. Die Anordnung der Lenk- und Liftachsen wird, den gewünschten Bedingungen entsprechend, vorgenommen. Durch die Anordnung von Lenkachsen wird eine Manövrierfähigkeit auch auf engem Raum ermöglicht. Insbesondere wird das Auf- und Abnehmen von Lasten, wie Behälter, Silos, Container oder ähnliches an vorbestimmten Stellen wesentlich erleichtert.

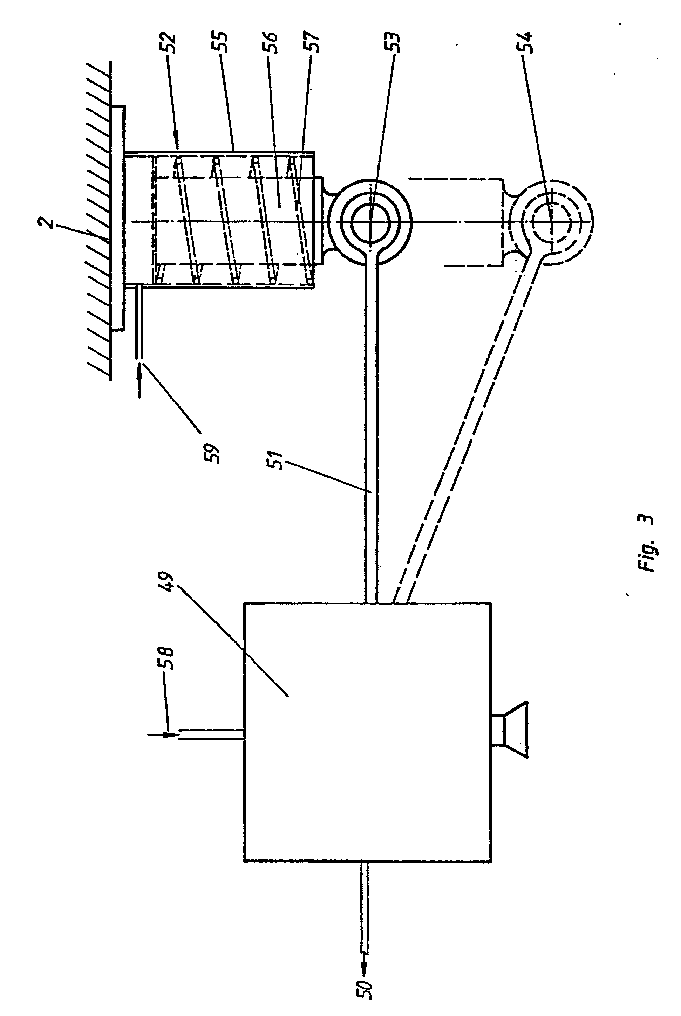

In Figur 3 ist ein Steuerventil 49 schematisch dargestellt, das an einer luftgefederten Achse montiert ist. Dieses Steuerventil 49 steuert den Druck in einer Luftfederung. Bei 58 wird Druckluft zugeführt. Diese Druckluft wird in vom Steuerventil 49 gesteuerter Weise der Luftfederung 50 zugeführt. Bisher war es üblich, einen Betriebspunkt des Steuerventils 49 dadurch festzulegen, daß das Steuerglied des Steuerventils 49 über eine Schwinge 51 mit einem Einstellglied 52 verbunden ist. Dieses Einstellglied 52 wird vom Fahrzeughersteller eingestellt und in der eingestellten Lage arretiert. Dieses Einstellglied 52 ist als Stellzylinder 55 ausgebildet, der mit einer Luftdrucksteuerleitung 59 in Verbindung steht. In diesem Stellzylinder 55 ist ein, mittels einer Rückholfeder 57 beaufschlagter Kolben 56 angeordnet. Mittels dieses Stellzylinders 55 kann beispielsweise die Schwinge 51 in die beiden, bei 53 und 54 dargestellten Eindstellung, gebracht werden. Damit können unterschiedliche Steuercharakteristika des Steuerventils 49 eingestellt werden. Durch die erfindungsgemäße Ausbildung der Luftfederung wird es einerseits möglich, die gesamte Höhe des Transportfahrzeuges beim Transport auf ebener Straße auf das gesetzlich zulässige Höchstmaß zu beschränken oder andererseits, bei erforderlichem Achsausgleich, die für unebenes Baustellengelände notwendige Bodenfreiheit, einzustellen.

## Patentansprüche

1. Fahrgestell für Transportfahrzeuge, insbesondere Schubgelenkzüge, Sattelauflieger, Anhänger, Kurz- und/oder tiefgekuppelte Anhänger, bei dem wenigstens eine der Fahrzeugachsen mittels einer gesonderten Lenkung frei dreh- und lenkbar und gegebenenfalls nachlaufgelenkt ausgebildet ist, dadurch gekennzeichnet, daß wenigstens eine der Fahrzeugachsen (38, 44) als Liftachse und/oder in Längsrichtung verschiebbar ausgebildet ist.

2. Fahrgestell nach Anspruch 1, dadurch gekennzeichnet, daß mit mindestens einer luftgefederten Achse (38), an der ein Luftsteuerventil (49) montiert ist, dessen Steuerelement mittels einer Schwinge (51) einstellbar ist, die über ein Einstellglied (52) mit dem Fahrzeug verbunden ist, und daß das Einstellglied (52) als mit einer Rückholfeder (57) beaufschlagter, luftdruckgesteuerter Stellzylinder (55) ausgebildet ist.

## Claims

1. Chassis for transport vehicles, more particularly articulated trailers, semi-trailers, trailers, short and/or low-coupled trailers wherein at least one of the vehicle axles is designed by means of a separate steering to be freely rotatable and steerable and if required to follow the main steering, characterised in that at least one of the vehicle axles (38, 44) is designed as a lift axle and/or is displaceable in the longitudinal direction.

2. Chassis according to claim 1 characterised in that with at least one air-sprung axle (38) on which is mounted an air control valve (49) whose control element is adjustable by means of an arm (51) which is connected to the vehicle by an adjustment member (52), and that the adjustment member (52) is designed as an air-pressure-controlled servo cylinder (55) which is biassed by a resetting spring (57).

## Revendications

1. Châssis pour véhicules de transport et, en particulier, pour trains articulés, semi-remorques, remorques, remorques à accouplement court et/ou profond, dans lequel au moins l'un des essieux du véhicule est disposé de façon à pivoter et être orienté librement et, éventuellement, à être orienté en poursuite, caractérisé en ce qu'au moins l'un des essieux du véhicule (38, 44) se présente sous forme d'un axe de levée et/ou peut se déplacer en direction longitudinale.

2. Châssis selon la revendication 1, caractérisé en ce qu'il comporte au moins un essieu à suspension pneumatique (38) sur lequel est montée une vanne de commande pneumatique (49) dont l'élément de commande peut être réglé au moyen d'une bielle (51) qui est connectée au véhicule au moyen d'un élément de réglage (52), et en ce que l'élément de réglage (52) est disposé sous forme d'un cylindre de réglage (55) à commande pneumatique et sur lequel s'applique un ressort de rappel (57).

Fig. 1

Fig. 2

EP 0 282 442 B1

Fig. 3